# EUROPÄISCHE PATENTSCHRIFT

(11) **EP 1 745 847 B1**
(45) Veröffentlichungstag und Bekanntmachung des Hinweises auf die Patenterteilung: **05.03.2008**
(21) Anmeldenummer: 06014199.1
(22) Anmeldetag: 08.07.2006
(51) Int. Cl.: B01J 31/04

(54) **Trimerisierungskatalysatoren**
Trimerization catalysts
Catalyseurs de trimérisation

(30) Priorität: 21.07.2005 DE 102005034052
(43) Veröffentlichungstag der Anmeldung: 24.01.2007
(73) Patentinhaber: Evonik Goldschmidt GmbH, 45127 Essen (DE)
(72) Erfinder: Eilbracht, Christian, Dr., 44627 Herne (DE); Klincke, Manfred, 44581 Castrop-Rauxel (DE); Metz, Torsten, 45141 Essen (DE); Schiller, Carsten, Dr., 45470 Mülheim an der Ruhr (DE)

(56) Entgegenhaltungen:
- WO-A-98/08886
- US-B1- 6 518 346

## Beschreibung

Die Erfindung betrifft ein Trimerisierungskatalysatorsystem für Isocyanate, dessen Verwendung, ferner ein Verfahren zur Herstellung von PIR-Schäumen sowie entsprechend hergestellte PIR-Schäume.

Polyurethanschaum ist als Isolationsmaterial anderen Materialien, wie z.B. Polystyrol-Schaumstoffen, Glas- und Mineralwollen, im thermischen Isolationsvermögen überlegen und gewinnt daher zunehmende Bedeutung bei der Wärmedämmung von Gebäuden. Für diese Anwendung gelten jedoch Brandschutzvorschriften, die mit der Polyurethan-(PUR-) Technologie nur durch Einsatz erheblicher Mengen an Flammschutzmitteln (z.B. Tris(chlorisopropyl)phosphat, Triethylphosphat) einzuhalten sind. Eine schwerere Entflammbarkeit der polymeren Grundsubstanz und damit eine Einsparung an Flammschutzmittel kann durch die an sich bekannte PIR-Technologie (PIR = hochvernetzte Polyisocyanurate) erreicht werden. Dabei wird neben der Polyolkomponente zur Polyaddition mit Isocyanaten im Unterschied zur PUR-Technologie eine 2- bis 3-mal größere Menge an Isocyanat eingesetzt, als stöchiometrisch zur Umsetzung aller OH-Gruppen der PolyolKomponente erforderlich wäre. Die überschüssigen Isocyanat-Gruppen werden durch einen geeigneten Katalysator zu Isocyanurat-Gruppierungen trimerisiert. Diese führen zu einer zusätzlichen Vernetzung des Polymers. Geeignete und für den Einsatz in der PIR-Technologie prinzipiell bekannte Katalysatoren sind Kaliumsalze von Carbonsäuren, insbesondere Kalium-2-ethylhexanoat (Kaliumoctoat) und Kaliumacetat.

Kaliumoctoat ist ein Feststoff. Da das Equipment der Polyurethan-Hersteller aber nur den Umgang mit flüssigen Stoffen erlaubt, muss das Kaliumoctoat gelöst werden. Stand der Technik sind ca. 75 gew.-%ige Lösungen in Monoethylenglycol oder Diethylenglycol. Derartige Lösungen werden von verschiedenen Herstellern angeboten. Typische Produkte sind beispielsweise
KOSMOS^{®} 75 Goldschmidt
KOSMOS^{®} 75 MEG Goldschmidt
Pel-Cat 9540-A Ele-Pelron
Pel-Cat 9865 Ele-Pelron
Dabco K-15 Air Products.

Da die als Lösungsmittel eingesetzten Glycole freie OH-Gruppen besitzen, reagieren sie mit den eingesetzten Isocyanaten, beispielsweise 4,4'-Methylen-bis-(phenylisocyanat) (MDI) und verbrauchen dabei einen gewissen Anteil der Isocyanat-Gruppen. Dieser Verbrauch ist bei der Berechnung einer PIR-Formulierung zu berücksichtigen, d.h. es ist für ein gewünschtes Verhältnis von NCO-Gruppen zu OH-Gruppen mehr MDI erforderlich, als ohne die im Katalysator enthaltenen OH-Gruppen benötigt würde. Dieser Verbrach an MDI durch den Katalysator liegt bei typischen Formulierungen im Bereich von 3 bis 10 % der insgesamt eingesetzten MDI-Menge.

Die Erfindung stellt sich daher die Aufgabe, ein bei Raumtemperatur (25 °C) pumpfähiges, d.h. fließfähiges Trimerisierungskatalysatorsystem auf der Basis von Kaliumoctoat für die PIR-Schaumherstellung bereitzustellen, das, verglichen mit dem Stand der Technik, einen reduzierten Verbrauch an MDI ermöglicht. Dabei soll das Katalysatorsystem möglichst die gleiche katalytische Aktivität (bezogen auf den gleichen Kaliumoctoat-Gehalt) zeigen wie etablierte Produkte, die Glykole als Lösungsmittel enthalten. Ferner soll keine Verschlechterung der Eigenschaften von PIR-Schäumen, die unter Verwendung des Katalysators hergestellt wurden, auftreten verglichen mit Schäumen, die mit konventionellen Katalysator-Lösungen produziert wurden. Zusätzlich soll das Lösungsmittel den Anforderungen genügen, die durch das Herstellungsverfahren des Katalysators bedingt sind. Es sollte eine ausreichende chemische Beständigkeit aufweisen und nicht als giftiger (T) oder sehr giftiger Stoff (T+) nach dem europäischen Chemikaliengesetz eingestuft sein.

Die Aufgabe wird erfindungsgemäß gelöst durch ein Trimerisierungskatalysatorsystem für Isocyanate, enthaltend mindestens 50 Gew.-% Kaliumoctoat und ein hydroxylgruppen- und aminogruppenfreies Lösungsmittel, das gegenüber den eingesetzten Isocyanaten unter üblichen Reaktionsbedingungen im Wesentlichen oder vollständig inert ist, welches dadurch gekennzeichnet ist, dass es ein oder mehrere hydroxylgruppen- und aminogruppenfreie Amide, Lactame und/oder Phosphorigsäure-, Phosphorsäure- oder Phosphonsäureester oder Sulfoxide enthält.

Ganz besonders bevorzugt sind erfindungsgemäße Trimerisierungskatalysatorsysteme mit einem Kaliumoctoat-Gehalt von mindestens 60, insbesondere bevorzugt 65 bis 90 Gew.-%.

Das erfindungsgemäße Trimerisierungskatalysatorsystem vermeidet einen unproduktiven Verbrauch von MDI und ermöglicht so eine Einsparung von MDI bei der Produktion von PIR-Hartschaum, die zu einer Kostenersparnis führt. Zusätzlich kann die eingesparte Menge an MDI in Zeiten eines MDI-Mangels auf dem Weltmarkt zu einer Ausweitung der Produktion von Hartschaumstoffen genutzt werden.

Überraschend wurde gefunden, dass Lactame, organische Phosphate und Phosphonate die gestellten Anforderungen in besonderer Weise erfüllen. Geeignete Lösungsmittel im Sinne dieser Erfindung sind daher Amide, Lactame und Phosphorigsäure-, Phosphorsäure- oder Phosphonsäureester sowie Sulfoxide, insbesondere Dimethylsulfoxid (DMSO). Besonders bevorzugte Beispiele sind Triethylphosphat (TEP), der Ethylester der Phosphorsäure, sowie ganz besonders N-Methyl-2-pyrrolidon (NMP), das Lactam der 4-Methylaminobuttersäure, das sich darüber hinaus durch ausgezeichnete Hydrolysebeständigkeit auszeichnet.

Dies war aus mehreren Gründen nicht zu erwarten:
- Viele Lösungsmittel wurden auf ihre Lösungseigenschaften für Kaliumoctoat getestet. Nur sehr wenige zeigten ein ausreichendes Lösungsvermögen, um Konzentrationen von 50 Gew.-% und mehr realisieren zu können. Eine niedrige Viskosität ist eine weitere schwer zu erfüllende Anforderung.

Es gibt kein wissenschaftliches Modell, das eine verlässliche und genaue Vorhersage von Löslichkeiten und Lösungsviskositäten erlaubt. Besonders bevorzugt weist das erfindungsgemäße Katalysatorsystem eine niedrige Viskosität von bis zu 7.000 mPa·s, insbesondere bis zu 3.000 mPa·s auf (Höppler bei 25 °C).
- Lösungsmittel im Sinne der Erfindung können mehr oder weniger beständige Solvat-Komplexe mit dem gelösten Stoff bilden. Die Solvatation kann daher Einfluss auf die katalytischen Eigenschaften eines gelösten Katalysators ausüben. Dennoch stimmen die katalytischen Aktivitäten gleich konzentrierter Lösungen von Kaliumoctoat in NMP, TEP und Glycolen überein.
- Amide und Lactame sind Derivate von Aminen. Amine werden als Katalysatoren für die NCO/OH-Reaktion in Polyurethan-Formulierungen eingesetzt. Es wurde jedoch gefunden, dass Amide und Lactame keine signifikanten katalytischen Eigenschaften besitzen. Eine neue Abstimmung der Amin-Katalyse der Formulierung ist daher beim Einsatz von diesen Lösungsmitteln als Bestandteil des Trimerisierungskatalysators nicht erforderlich.

Für die erfindungsgemäßen Lösungsmittel könnte man stark ausgeprägte "Weichmacher-Eigenschaften" erwarten. Mono- oder Diethylenglycol werden dagegen in das Polyurethan-Gerüst mit eingebaut und zählen mit zu den Hartsegmenten des Polymers. Dennoch unterscheiden sich die mechanischen Eigenschaften von PIR-Schäumen, die mit den erfindungsgemäßen Katalysatoren hergestellt wurden, nicht signifikant von entsprechenden Schäumen, die mit konventionellen Katalysatoren hergestellt wurden.

Daher finden die erfindungsgemäßen Trimerisierungskatalysatorsysteme unter Ausnutzung der beschriebenen Vorteile insbesondere Verwendung zur Trimerisierung von Isocyanaten zu Isocyanuraten und/oder Polyisocyanuraten.

Gegenstand der Erfindung ist vor diesem Hintergrund weiterhin ein Verfahren zur Herstellung von PIR-Schäumen, enthaltend Polyadditionen von hydroxylgruppenhaltigen Substraten und organischen Isocyanaten sowie vernetzende Trimerisierungsreaktionen von Isocyanatgruppen zu polymergebundenen Isocyanuraten, dadurch gekennzeichnet, dass man ein erfindungsgemäßes Trimerisierungskatalysatorsystem zur Trimerisierung der Isocyanatgruppen einsetzt.

Dabei setzt man bevorzugt organische Diisocyanate, insbesondere 4,4'-Methylen-bis-(phenylisocyanat) (MDI) ein, es können jedoch auch - in Kombination oder einzeln - weitere Mono-, Di-, Tri-, Oligo- und/oder Polyisocyanate Verwendung finden.

Durch das erfindungsgemäße Verfahren sind PIR-Schäume mit Trimerisierungskatalysatorsysteme auf der Basis von Phosphorigsäure-, Phosphorsäure- oder Phosphorsäureestern zugänglich, die sich durch einen außerordentlich niedrigen Gehalt an weiteren zugesetzten Flammschutzmitteln bei konstant hohem Flammschutz auszeichnen.

### Ausführungsbeispiele:

Das MDI-einsparungspotential der erfindungsgemäßen Trimerisierungskatalysatoren wurde durch die folgenden Beispiele und Vergleichsbeispiele demonstriert:

### Vergleichsbeispiel 1

### (nicht erfindungsgemäß):

PIR-Formulierung (Index <260>) mit konventionellem Trimerisierungskatalysator (Kaliumoctoat 75 %ig in MEG Kosmos^{®} 75 MEG, OH-Zahl = 600)
100 Gew.-Teile aromatischer Polyester-Polyol
20 Gew.-Teile TCPP (Flammschutzmittel)
0,3 Gew.-Teile PMDETA (Amin-Katalysator für die NCO/OH-Reaktion)
5,0 Gew.-Teile KOSMOS^{®} 75 MEG
0,9 Gew.-Teile Wasser
2,0 Gew.-Teile Polyethersilicon (Schaumstabilisator)
17 Gew.-Teile cyclo-/iso-Pentan-Gemisch (Treibmittel)
207 Gew.-Teile polymeres MDI

### Beispiel 1

### (erfindungsgemäß):

Mit Kaliumoctoat 70 %ig in NMP, 1,5 % Wasser, OH-Zahl = 93

| | |
|---|---|
| 100 Gew.-Teile | aromatischer Polyester-Polyol |
| 20 Gew.-Teile | TCPP (Flammschutzmittel) |
| 0,3 Gew.-Teile | PMDET (Amin-Katalysator für die |
| | NCO/OH-Reaktion) |
| 5,4 Gew.-Teile | Kaliumoctoat, 70 %ige Lösung in NMP |
| 0,9 Gew.-Teile | Wasser |
| 2,0 Gew.-Teile | Polyethersilicon (Schaumstabilisator) |
| 17 Gew.-Teile | cyclo-/iso-Pentan-Gemisch (Treibmittel) |
| 191 Gew.-Teile | polymeres MDI |

### Beispiel 2

### (erfindungsgemäß):

Mit Kaliumoctoat 70 %ig in TEP, 1,5 % Wasser, OH-Zahl = 93)

| | |
|---|---|
| 100 Gew.-Teile | aromatischer Polyester-Polyol |
| 20 Gew.-Teile | TCPP (Flammschutzmittel) |
| 0,3 Gew.-Teile | PMDETA (Amin-Katalysator für die |
| | NCO/OH-Reaktion) |
| 5,4 Gew.-Teile | Kaliumoctoat, 70 %ige Lösung in TEP |
| 0,9 Gew.-Teile | Wasser |
| 2,0 Gew.-Teile | Polyethersilicon (Schaumstabilisator) |
| 17 Gew.-Teile | cyclo-/iso-Pentan-Gemisch (Treibmittel) |
| 191 Gew.-Teile | polymeres MDI |

### Versuchsdurchführung:

Die drei Beispielrezepturen wurden im Handmischverfahren verschäumt. Dazu wurden Polyol, Flammschutzmittel, Amin-Katalysator, konventioneller bzw. erfindungsgemäßer Trimerisierungskatalysator, Wasser, Schaumstabilisator und Treibmittel in einen Becher eingewogen (jeweils 100 g Polyol, die anderen Komponenten entsprechend den angegebenen Gewichtsanteilen) und mit einem Tellerrührer (6 cm Durchmesser) 30 s bei 1.000 Upm vermischt. Durch erneutes abwiegen wurde die beim Mischvorgang verdunstete Treibmittelmenge bestimmt und wieder ergänzt. Jetzt wurde das MDI zugegeben, die Reaktionsmischung mit dem beschriebenen Rührer 5 s bei 3.000 Upm verrührt und sofort in eine mit Papier ausgekleidete, nach oben offene Kastenform (Grundfläche: 14 cm x 28 cm, Wandhöhe: 14 cm) überführt.
Die Cremezeit (Zeit vom Beginn des Vermischens der Komponenten bis zum Beginn des Schäumungsvorganges), Fadenziehzeit (Zeit vom Mischbeginn bis zu dem Zeitpunkt, bei dem ein in den Schaum gestochener Stab beim Herausziehen erstmal Fäden nach sich zieht), Steigzeit (Zeit vom Mischbeginn bis zum Ende des optisch wahrnehmbaren Aufsteigens des Schaums) und die Klebfreizeit (Zeit vom Mischbeginn bis zum Erreichen der Klebfreiheit) wurden manuell bestimmt.
Einen Tag nach der Verschäumung wurden die Schäume analysiert. Oberfläche und Innenstörungen wurden subjektiv beurteilt. Für die Innenstörungen standen folgende Bewertungen zur Auswahl: nahezu ungestört, kaum, mäßig, mittel, stark, sehr stark und extrem gestört. Die Porenstruktur (mittlere Zahl der Zellen pro 1 cm) wurde auf einer Schnittfläche optisch durch Vergleich mit Vergleichsschäumen beurteilt. Das Raumgewicht wurde durch abwiegen von würfelförmigen Probekörpern mit 10 cm Kantenlänge ermittelt, die zentral aus den Schäumen gesägt wurden. Die Stauchhärten der Schäume wurden an würfelförmigen Probekörpern mit 5 cm Kantenlänge nach DIN 53421 bis zu einer Stauchung von 10 % gemessen (angegeben ist die in diesem Messbereich maximal aufgetretene Druckspannung). Es wurden jeweils mehrere Probekörper in Steigrichtung des Schaums und senkrecht dazu belastet. Die Wärmeleitzahl wurde an 2,5 cm dicken Scheiben mit einem Gerät vom Typ Hesto λ Control bei Temperaturen an Probenunter- und -oberseite von 10 °C und 36 °C gemessen.

### Ergebnisse:

| | Vergleichsbeispiel 1 | Beispiel 1 | Beispiel 2 |
|---|---|---|---|
| Cremezeit [s] | 15 | 14 | 14 |
| Fadenziehzeit[s] | 28 | 30 | 26 |
| Steigzeit [s] | 47 | 47 | 45 |
| Klebfreizeit [s] | 48 | 49 | 46 |
| Oberfläche | fast glatt | fast glatt | fast glatt |
| Innenstörungen | kaum | kaum | kaum |
| Porenstruktur [Zellen/cm] | 44-48 | 44-48 | 44-48 |
| Raumgew. [kg/m³] | 29,3 | 29,0 | 29,4 |
| Stauchhärte [kPa]* | 221 (↑↓) | 213 (↑↓) | 216 (↑↓) |
| | 42 (↑→) | 46 (↑→) | 41 (↑→) |
| Wärmeleitzahl [mW/m·K] | 20.3±0.3 | 20.4±0.2 | 20.1±0.3 |

| | | | |
|---|---|---|---|
| * ↑↓ in Steigrichtung, ↑→ senkrecht zur Steigrichtung | | | |

Bei gleicher Produktausbeute betrug die MDI-Ersparnis in den erfindungsgemäßen Beispielen 7,6 %.

Das Steig- und Reaktionsverhalten war bei allen drei Formulierungen nahezu identisch, ebenso die Störungsbilder und die physikalischen Eigenschaften der Schäume.

## Patentansprüche

1. Trimerisierungskatalysatorsystem für Isocyanate, enthaltend mindestens 50 Gew.-% Kaliumoctoat und ein hydroxylgruppen- und aminogruppenfreies Lösungsmittel, das gegenüber den eingesetzten Isocyanaten unter den Reaktionsbedingungen inert ist, **dadurch gekennzeichnet, dass** es ein oder mehrere hydroxylgruppen- und aminogruppenfreie Amide, Lactame und/oder Phosphorigsäure-, Phosphorsäure- oder Phosphonsäureester oder Sulfoxide enthält.

2. Trimerisierungskatalysatorsystem gemäß Anspruch 1 mit einem Kaliumoctoat-Gehalt von mindestens 60, insbesondere 65 bis 90 Gew.-%.

3. Trimerisierungskatalysatorsystem nach Anspruch 1 oder 2, **dadurch gekennzeichnet, dass** als Lösungsmittel Triethylphosphat (TEP), N-Methyl-2-pyrrolidon (NMP) oder Dimethylsulfoxid (DMSO) enthalten ist.

4. Trimerisierungskatalysatorsystem nach einem der Ansprüche 1 bis 3, **dadurch gekennzeichnet, dass** es eine Viskosität von bis zu 7.000 mPa·s, insbesondere bis zu 3.000 mPa·s (Höppler bei 25 °C) aufweist.

5. Verwendung eines Trimerisierungskatalysatorsystems für Isocyanate, enthaltend mindestens 50 Gew.-% Kaliumoctoat und ein hydroxylgruppen- und aminogruppenfreies Lösungsmittel, das gegenüber den eingesetzten Isocyanaten unter den Reaktionsbedingungen inert ist, zur Trimerisierung von Isocyanaten zu Isocyanuraten und/oder Polyisocyanuraten, **dadurch** gekenzeichnet, dass ein Katalysatorsystem gemäß einem der Ansprüche 1 bis 4 verwendet wird.

6. Verfahren zur Herstellung von PIR-Schäumen, enthaltend Polyadditionen von hydroxylgruppenhaltigen Substraten und organischen Isocyanaten sowie vernetzende Trimerisierungsreaktionen von Isocyanatgruppen zu polymergebundenen Isocyanuraten, **dadurch gekennzeichnet, dass** man ein Trimerisierungskatalysatorsystem für Isocyanate, enthaltend mindestens 50 Gew.-% Kaliumoctoat und ein hydroxylgruppen- und aminogruppenfreies Lösungsmittel, das gegenüber den eingesetzten Isocyanaten unter den Reaktionsbedingungen inert ist, gemäß einem der Ansprüche 1 bis 4 einsetzt.

7. Verfahren gemäß Anspruch 6, **dadurch gekennzeichnet, dass** man organische Diisocyanate, insbesondere 4,4'-Methylen-bis-(phenylisocyanat) (MDI) einsetzt.

## Claims

1. Trimerization catalyst system for isocyanates, comprising at least 50% by weight of potassium octoate and a hydroxy-group-free and amino-group-free solvent which, under the reaction conditions, is inert toward the isocyanates used, **characterized in that** it comprises one or more hydroxy-group-free and amino-group-free amides, lactams, and/or phosphorous, phosphoric, or phosphonic esters, or sulfoxides.

2. Trimerization catalyst system according to Claim 1, whose potassium octoate content is at least 60% by weight, in particular from 65 to 90% by weight.

3. Trimerization catalyst system according to Claim 3, **characterized in that** it comprises triethyl phosphate (TEP), or comprises N-methyl-2-pyrrolidone (NMP), or comprises dimethyl sulfoxide (DMSO) as solvent.

4. Trimerization catalyst system according to any of Claims 1 to 4, **characterized in that** it has a viscosity of up to 7000 mPa·s, in particular up to 3000 mPa·s (Höppler at 25°C).

5. Use of a trimerization catalyst system for isocyanates, comprising at least 50% by weight of potassium octoate and a hydroxy-group-free and amino-group-free solvent which, under the reaction conditions, is inert toward the isocyanates used for the trimerization of isocyanates to give isocyanurates and/or polyisocyanurates, **characterized in that** a catalyst system according to any of Claims 1 to 4 is used.

6. Process for production of PIR foams, comprising polyaddition reactions of substrates containing hydroxy groups and of organic isocyanates, and also crosslinking trimerization reactions of isocyanate groups to give polymer-bonded isocyanurates, **characterized in that** a trimerization catalyst system for isocyanates, comprising at least 50% by weight of potassium octoate and a hydroxy-group-free and amino-group-free solvent which, under the reaction conditions, is inert toward the isocyanates used, according to any of claims 1 to 4 is used.

7. Process according to Claim 6, **characterized in that** organic diisocyanates are used, in particular methylene 4,4'-bis(phenyl isocyanate) (MDI).

## Revendications

1. Système de catalyseur de trimérisation pour des isocyanates, contenant au moins 50 % en poids d'octoate de potassium et un solvant sans groupes hydroxyle ni groupes amino qui est inerte vis-à-vis des isocyanates employés et dans les conditions réactionnelles, **caractérisé en ce qu'**il contient un ou plusieurs amides sans groupes hydroxyle ni groupes amino, des lactames et/ou des esters d'acide phosphoreux, d'acide phosphorique ou d'acide phosphonique ou des sulfoxydes.

2. Système de catalyseur de trimérisation selon la revendication 1 avec une teneur en octoate de potassium d'au moins 60, en particulier entre 65 et 90 % en poids.

3. Système de catalyseur de trimérisation selon la revendication 1 ou 2, **caractérisé en ce qu'**il contient comme solvant du triéthylphosphate (TEP), de la N-méthyl-2-pyrrolidone (NMP) ou du diméthylsulfoxyde (DMSO).

4. Système de catalyseur de trimérisation selon l'une des revendications 1 à 3, **caractérisé en ce qu'**il présente une viscosité de jusque 7000 mPa·s, en particulier jusqu'à 3000 mPa·s (Höppler à 25°C).

5. Utilisation d'un système de catalyseur de trimérisation pour des isocyanates, contenant au moins 50 % en poids d'octoate de potassium et. un solvant sans groupes hydroxyle ni groupes amino qui est inerte vis-à-vis des isocyanates employés et dans les conditions réactionnelles, pour la trimérisation d'isocyanates en isocyanurates et/ou polyisocyanurates, **caractérisée en ce qu'**on utilise un système de catalyseur selon l'une des revendications 1 à 4.

6. Procédé de fabrication de mousses PIR contenant des polyadditions de substrats contenant des groupes hydroxyle et des isocyanates organiques ainsi que des réactions de trimérisation à réticulation de groupes isocyanate en isocyanurates liés polymères, **caractérisé en ce qu'**on utilise un système de catalyseur de trimérisation pour des isocyanates contenant au moins 50 % en poids d'octoate de potassium et un solvant sans groupes hydroxyle ni groupes amino qui est inerte vis-à-vis des isocyanates employés et dans les conditions réactionnelles, selon l'une des revendications 1 à 4.

7. Procédé selon la revendication 6, **caractérisé en ce qu'**on utilise des diisocyanates organiques, en particulier un 4,4'-méthylène-bis-(phénylisocyanate) (MDI).
